Europäisches Patentamt

European Patent Office

Office européen des brevets

(11) Publication number: **0 082 152**
**B1**

# (12) EUROPEAN PATENT SPECIFICATION

(45) Date of publication of patent specification: **16.07.86**

(21) Application number: **82900673.3**

(22) Date of filing: **24.02.82**

(86) International application number:
**PCT/SE82/00054**

(87) International publication number:
**WO 82/02869 02.09.82 Gazette 82/21**

(51) Int. Cl.⁴: **B 65 G 13/06,** B 65 G 23/26,
F 16 D 11/06

(54) **COUPLING DEVICE FOR THE COUPLING UP OR UNCOUPLING PREFERABLY OF A DRIVE ROLLER FOR A ROLLER CONVEYOR.**

(30) Priority: **26.02.81 SE 8101243**

(43) Date of publication of application:
**29.06.83 Bulletin 83/26**

(45) Publication of the grant of the patent:
**16.07.86 Bulletin 86/29**

(84) Designated Contracting States:
**BE DE FR GB NL**

(56) References cited:
**DE-C- 909 428**
**DK-C- 103 230**
**US-A-1 118 456**
**US-A-4 169 530**

**Derwent's abstract no. A5564B/03,**

(73) Proprietor: **SIREFELT, Lars**
**Sisjövägen 321**
**S-436 00 Askim (SE)**

(73) Proprietor: **WASSBERG, Kurt**
**Odenius Väg 20**
**S-443 00 Lerum (SE)**

(72) Inventor: **SIREFELT, Lars**
**Sisjövägen 321**
**S-436 00 Askim (SE)**

(74) Representative: **Mossmark, Anders et al**
**Patentbyran WEST-PATENT AB Stora Nygatan**
**15**
**S-411 08 Göteborg (SE)**

## Description

### Technical Field

The present invention relates to a coupling device for the coupling up or uncoupling of a drive roller mounted for rotation about a pivot shaft, for example for a roller conveyor, and comprising two coupling members which are rotatable coaxially with the pivot shaft of the drive roller and which are adapted to be changed over, by means of a control member between a coupled together state in which they are held against rotation in relation to one another and a state in which they are uncoupled from one another and in which the coupling members are permitted to rotate in relation to one another, one of the coupling members being connected to the drive roller which is held against rotation in relation thereto and the other coupling member being connected to a rotatable drive device, said one coupling member comprising at least one coupling surface and said other coupling member comprising at least three coupling portions each of which is pivotable about its own pivot shaft substantially parallel to the pivot shaft of the drive roller and at least three coupling members which can be changed over, by means of the coupling arms, between a release position and a coupling position.

### Background

From Derwent abstract A 5564B/03, SU 594 365 a coupling device is prior known having pivotable coupling arms which are adjustable between a coupling position and releasing position. The known device has an outer annular element which is a coupling member which is to be coupled into and out of respectively engagement with the central drive shaft. For adjustment to releasing position a bushing is displaced for each arm axially in order to come out of engagement with cam surfaces of the outer coupling member. The actuation of the known device is consequently relatively complicated and makes the known device utilizable for merely very special applications. This reference does not mention any solution to the difficult problem to establish an actuation movement from a control member which is not rotatable and positioned outside of the coupling and to the rotatable members which are to be adjusted.

### Technical Problem

The object of the present invention is to provide a simple and operationally reliable coupling device which can be produced at relatively low cost.

### The Solution

Said object is achieved by means of a device which is characterized in that the other coupling member includes a circular control ring which is situated radially outside the coupling arms and is displaceable substantially radially, said control ring having an inner contact surface, by means of which the control ring is arranged to cooperate with a control portion of the coupling arms and with an outer contact surface, by means of which the control ring is arranged to cooperate with the control member, the coupling arms being spring-loaded into a coupling position in which the control ring is held centered about the pivot shaft of the drive roller and the coupling members are in engagement with the coupling surface or surfaces of the one coupling member and can be changed over into a release position to change over the coupling members from a coupling position to a release position by pressing the control member against the outer contact surface of the control ring, causing substantially radial displacement of the control ring to an eccentric position relatively to said pivot shaft and a pressing of the control ring with its inner contact surface against the control portions of the coupling arms for said pivoting movement of the control arms.

### Brief Description of Drawings

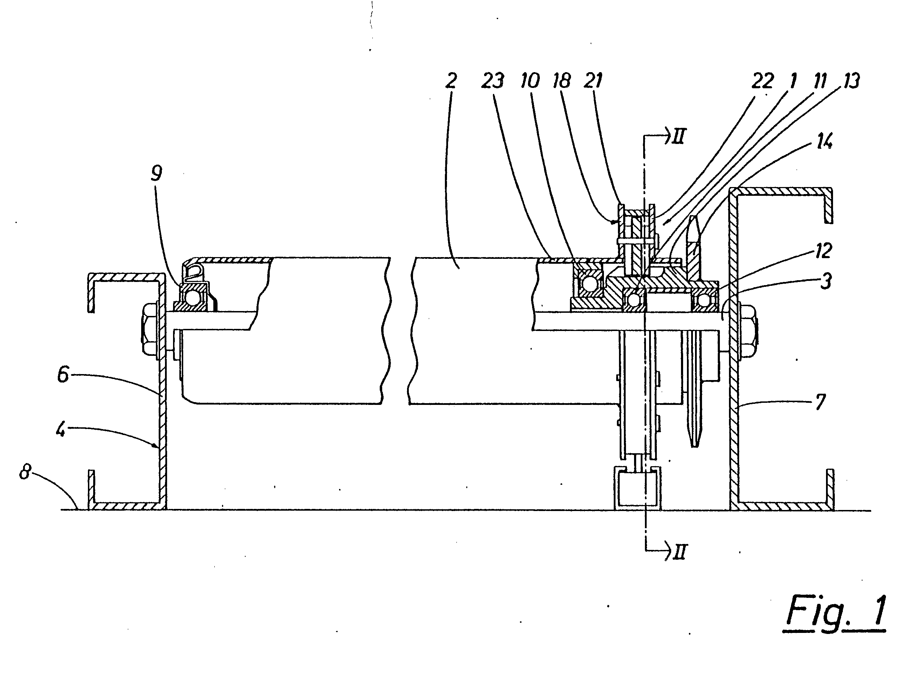

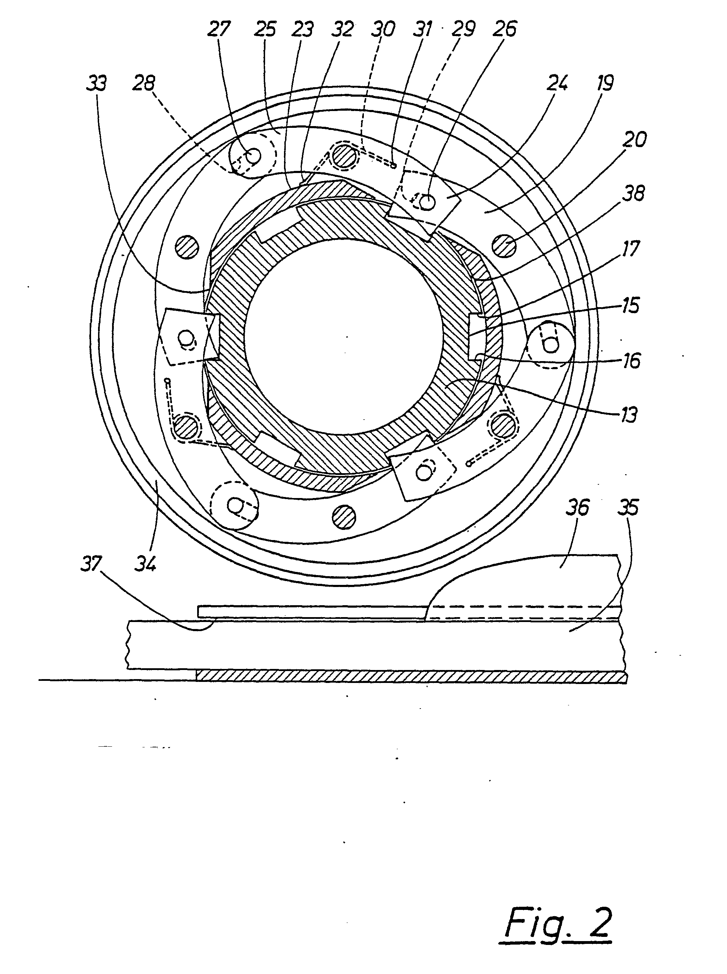

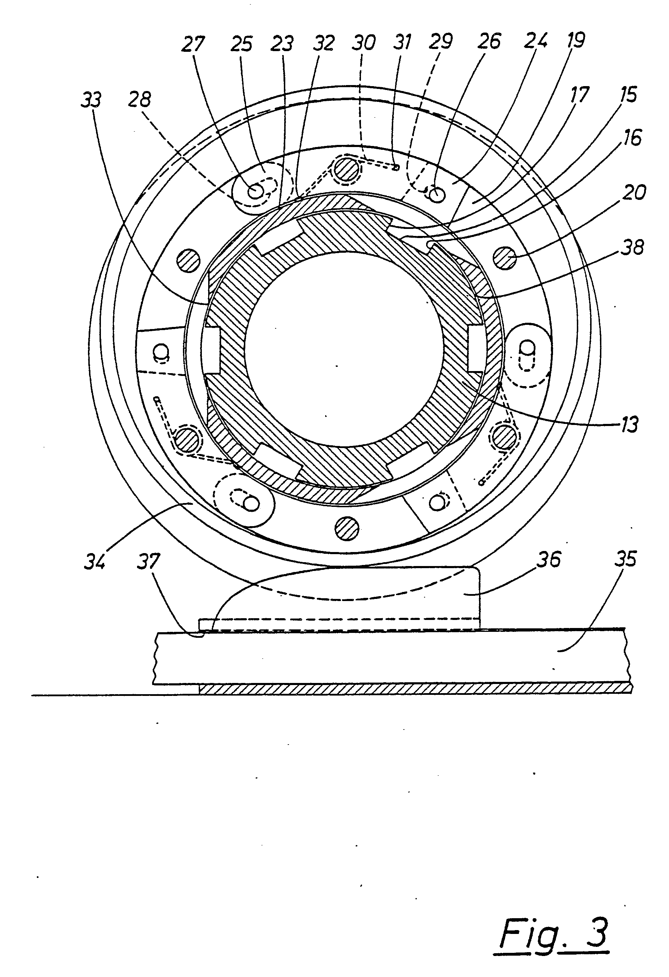

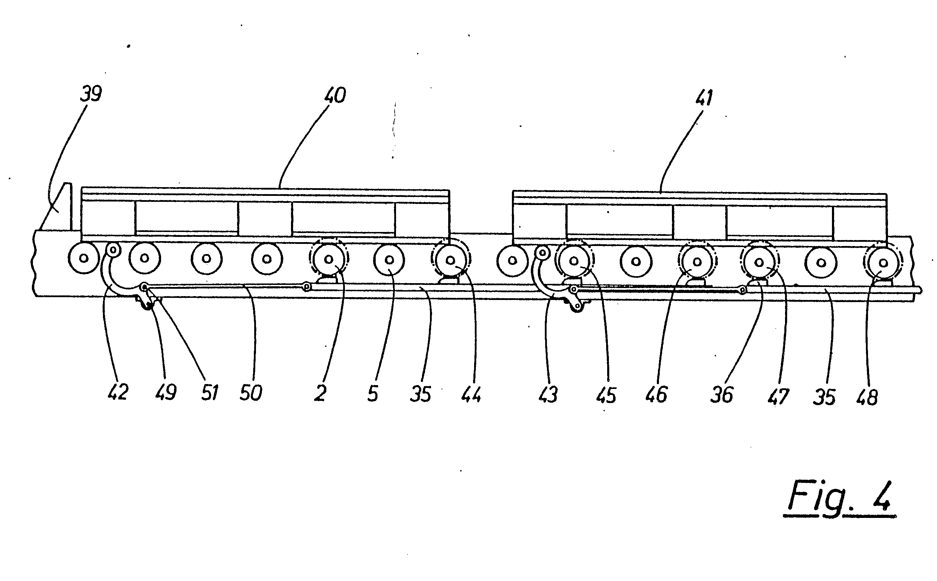

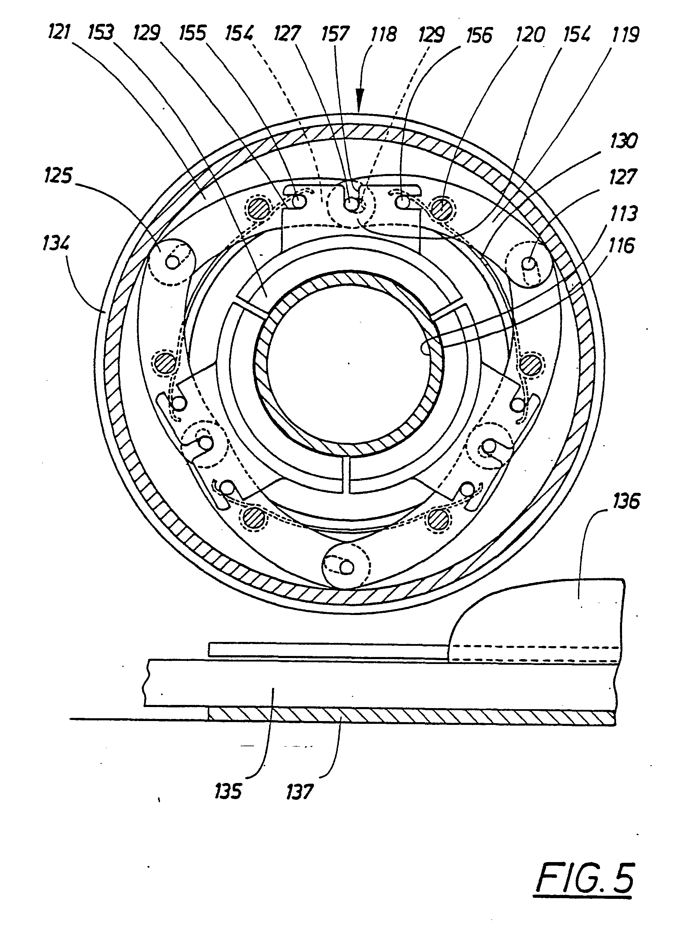

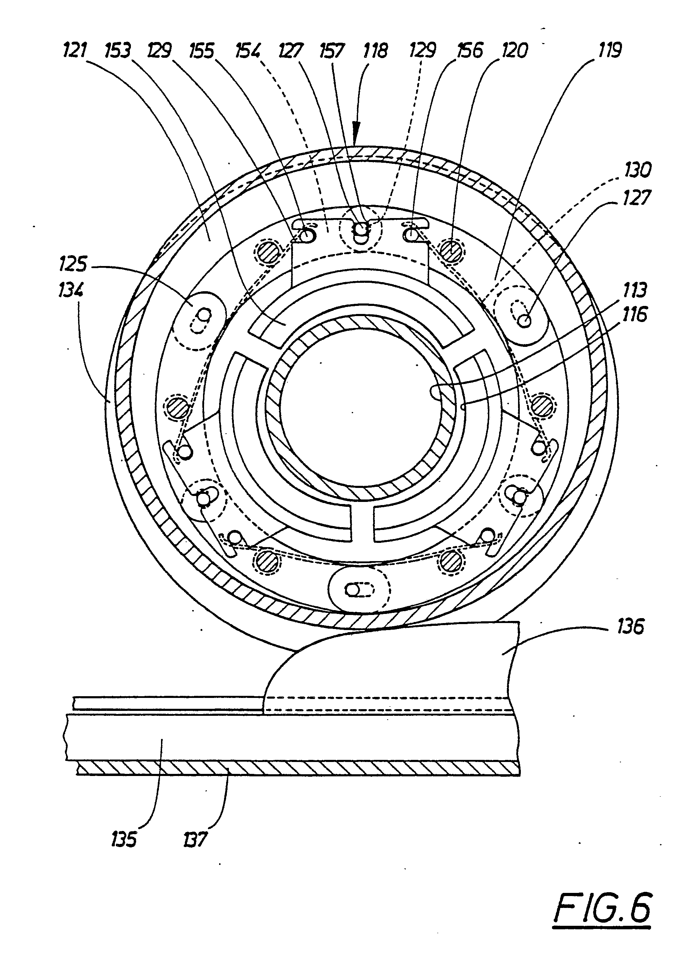

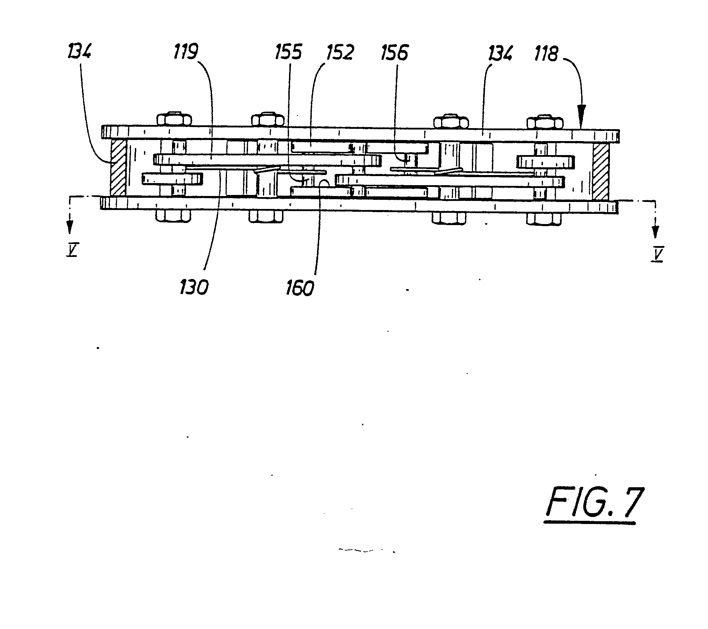

The invention will be described in more detail below with reference to the accompanying drawings in which Fig. 1 shows a partially broken view of a coupling device according to the invention in a second embodiment mounted on a drive roller for a roller conveyor, Figs. 2 and 3 are sections through the coupling device of Fig. 1 in the coupled position and uncoupled position respectively, on the line II—II in Fig. 1, while Fig. 4 is a partially broken view of a part of a roller conveyor with drive rollers provided with coupling devices according to the invention. Fig. 5 and 6 show sectional views through the coupling device in a second embodiment in the coupled and uncoupled position respectively, whereas Fig. 7 is an end view of the coupling device according to the second embodiment.

### Best Mode of Carrying Out the Invention

The coupling device 1 according to the invention is particularly suitable for coupling in and uncoupling drive rollers 2, one of which is shown in Fig. 1 rotatably mounted about a pivot shaft 3 which is secured in a frame 4 and forms, together with this and a further number of drive rollers and non-driven rollers so called supporting rollers 5, a roller conveyor, one end of which is shown in Fig. 4. The frame consists mainly of two longitudinal beams 6, 7 which in the example shown, have C-shaped cross-section. The two beams 6, 7 are carried by a chassis 8 which is included in the frame 4 and which is only indicated by a line in Fig. 1.

The drive roller 2 is rotatably mounted about its pivot shaft 3 by means of a ball bearing 9 at one end and, in the example shown, three ball bearings 10, 11, 12 at its other end, by means of which the coupling device 1 is also rotatably mounted about the pivot shaft 3 of the drive roller.

The coupling device 1 according to the invention is provided with a first coupling member 13 which is rotatably mounted about the pivot shaft 3 by means of the bearings 11, 12 and which carries a pinion 14 mounted on this coupling member for rotation therewith but not in relation thereto. The pinion 14 is adapted to be in communication, via a drive chain not shown, with a drive device, not shown, for example an electric motor together with corresponding pinions on a number of other drive rollers in the roller conveyor. The bearing 10 is mounted between the first coupling member and the drive roller 2 and, in the uncoupled position of the coupling device 1, permits relative rotational movement between the first coupling member and the drive roller, as will be described in more detail below.

As can be seen from Figs. 2 and 3, the first coupling member 13 comprises a plurality of radially directed engagement portions 15, of which there are six in the example shown and which comprise two engagement edges 16, 17 facing one another. In Figs. 2 and 3, the pivot shaft 3 and the bearing 11 have been omitted for the sake of clarity. The coupling device is further composed of a second coupling member 18 which is connected to the drive roller 2 for rotation therewith but not in relation thereto and comprises a plurality of coupling hook elements 19, of which there are six in the example shown, and which are each pivotally mounted about their own pivot shafts 20 in a holder which, in the example shown, consists of two annular disc elements 21, 22 which are parallel with one another and which are rigidly mounted for example by welding to the cylindrical body 23 of the drive roller (see Fig. 1). Each of the coupling hook elements 19 is constructed in the form of a swinging lever with a hooking portion 24 and a control portion 25. The coupling hook elements 19 face one another in pairs and are apportioned to one another both in the hooking portion 24 and in the control portion 25 and connected to one another by means of a pin 26, 27 which is mounted in each end of each coupling hook element and which is rigidly mounted in one of two portions associated with one another and is inserted in a somewhat oblong opening 28, 29 which forms a guide for the associated pin. For the sake of stability and for the sake of strength, every other coupling hook element 19 may be duplicated and so comprise double elements which are mutually rigidly connected with spacing by means of the pins 26, 27. In this case, the simple elements are inserted in the gap between the double elements. The coupling hook element 19 is spring loaded by means of the spring element 30, which in the example shown, is mounted on three of the hook elements 19 and more precisely round the associated pivot shaft 20. In the example shown, each spring element 30 is secured by its one end 31 in a bore in the associated hook element 29 and is supported, at its other end 32 against the cylindrical body of the drive roller. This comprises three openings 33 through which the hook elements can extend with their hooking portions 24. The spring element tends to pivot the coupling hook element 19 so that its hooking portion 24 is pressed radially inwards and tends to come into engagement with the engagement portions 15 on the first coupling member 13 while the opposite end of the coupling hook element, that is to say the control portion 25, tends to be pressed radially outwards.

Included in the second coupling member 18 is a control ring 34 which is carried by the coupling hook element 19 and which rests with its inside against the control portion 25 of the coupling hook element and is guided sideways between the two disc elements 21, 22 of the holder. Nevertheless, there is a certain play between the control ring 34 and the disc element so that the control ring is able to be displaced in a plane perpendicular to the pivot shaft 3 and substantially radially in the coupling position of the coupling device. In addition, the ring can slide, that is to say rotate, in relation to the hook element. In Fig. 2, the control ring 34 is shown situated coaxially with the pivot shaft 3, the coupling hook element being in engagement with. the engagement portion 15 of the first coupling member. The control ring 34 is thus held in this position under the influence of the spring element 30 via the coupling hook element 19.

The coupling device 1 also includes a control arm 35 which comprises a control portion 36. The control arm 35 is adapted to be displaced along a guide 37 between a lower position as shown in Fig. 2 in which the control portion 36 does not act on the control ring 34 so that the coupling device is in the coupling position, and an activated position as shown in Fig. 3 in which the control arm 35 is displaced along the guide 37 parallel to the direction of the tangent to the control ring 34, as a result of which the control arm with its control end 36 causes a substantially radially displacement of the control ring 34 into a position which is eccentric in relation to the pivot shaft 3. This means that the coupling hook element 19, since its control portion 25 is pressed radially inwards, is swung into the position shown in Fig. 3 against the action of the spring element 30. As the control ring 34 is displaced radially, the hook elements 19 together assume more and more the shape of a circular ring. The circular shaped is formed completely in the uncoupled position shown in Fig. 3. This ring has a radius of curvature which is less than the radius of curvature of the control ring. While the coupling device 1 is in the coupling position as shown in Fig. 2, the second coupling member, that is to say the outer portion of the coupling and hence the drive roller, is entrained which means that the control ring 34 also rotates. As a result of the fact that its outside is completely circular and as a result of the fact that the control ring is suspended "floating" and is able to rotate in relation to the coupling hook element 19, the control ring 34 is braked during the changeover of the coupling device to the uncoupled position first by its friction against the control end 36, while the coupling hook element is able to slide with its control portion 25 against the inside of the control ring until the coupling hook element is swung over into the release position and the engagement position ceases, whereupon all the elements in the second coupling member cease to rotate and so also does the drive roller, while the first coupling member 11 can continue its rotation.

In the reverse manner, the coupling device is changes over from the uncoupled position to the coupling position by pulling the control arm 35 down. In the course of this, the control ring 34 is relieved of the pressure from the control end 36 whereupon the control ring and hence the coupling hook elements resume their position shown in Fig. 2 under the influence of the spring elements 30. In the course of this, the hooking portions 24 are pressed radially inwards towards the first coupling member 13 and slide against its peripheral surface 38 and as soon as the coupling member 13 which is constantly in rotation so long as the roller conveyor is in operation, is in such a torsional position that its engagement portions 15 come immediately in front of the hook portions 24 of the hook elements 19, these are pressed into the engagement portions and assume the coupling position, entraining the second coupling member and hence the drive roller 2. As a result of the shape of the engagement portions and the doubly directed action of the hook portions as a result of the hook elements facing one another, engagement is obtained regardless of the direction of rotation of the first coupling member 13.

Fig. 4 shows one end of a roller conveyor which comprises a stop element 39 up to which articles are conveyed for unloading from the roller conveyor. These articles are represented by loading pallets 40, 41 in the example shown. At the end of the roller conveyor track it is necessary for the drive rollers to be changed over between the coupling position and the uncoupled position. This change-over is brought about by means of a detecting arm 42 for each group of drive rollers. In Fig. 4, the drive rollers in a first group are designated by 2, 44, 45 and 46, while a second group of drive rollers which can be coupled in and uncoupled comprise an equally great number, of which two drive rollers 47, 48 are shown.

The articles are conveyed along the roller conveyor being driven forward by means of the drive rollers which, by being driven by means of an associated drive device, are caused to rotate and so to convey the loading pallets. In the absence of articles in the roller conveyor, the detecting arms 42, 43 project upwards between two rollers and are pivotally mounted in the frame of the roller conveyor about a shaft 49 and are loaded by means of a spring, not shown, so that they tend to assume a swung-upwards position projecting between two rollers. Via an articulated arm 50, the detecting arm 42 is articulately connected to the control arm 35 which is common to each of the groups of drive rollers. Therefore, four control portions 36 are mounted on each control arm 35, one for each drive roller which can be coupled up and uncoupled in each group. The control portions 36 are so situated that they are in the activated position, uncoupling the coupling device, when the detecting arm 42 is in the pressed down position as shown in Fig. 4. This is brought about as a result of the fact that the articulated arm 50 is articulately connected to the control arm at a joint 51 which is a short distance away from the pivot pin 49 of the detecting arm, as a result of which leverage occurs which leads to a displacement movement of the control arm 35 so that the detecting portions 36 can be changed over between a lowered and an activated position.

Thus, so long as no article holds the detecting arms 42, 43 pressed down, the control arms 35 and the associated control portion 36 are in the lowered position, in which case the coupling devices in each of the drive rollers is in a coupling position, meaning that the drive rollers are coupled in for driving and are so in driving connection with the drive device. The loading pallets can thus be conveyed along the roller conveyor. When there is no loading pallet at the end of the roller conveyor, a conveying of the loading pallets takes place even when they press down the first detecting arm 43 and so uncouple the associated group of drive rollers 47, 48 and two more drive rollers not shown, since the detecting arm 43 is beyond two drive rollers, seen in the conveying direction, belonging to the second group of drive rollers which is activated by the detecting arm 42. This means that the loading pallets are driven forwards by means of the two drive rollers 45, 46 and also other rollers 2, 44 connected to the detecting arm 42 situated closest to the end of the conveyor. When the loading pallet 40 has reached the end of the conveyor and so been stopped by means of the end stop 39 and the detecting arm 42 has been pressed down, the drive rollers 2, 44, 45, 46 are changed over from the driving state when the coupling device in the coupling position to the uncoupled state in which these drive rollers stop. When the following loading pallet 41 has pressed down the detecting arm 43, the corresponding group of drive rollers 47, 48 is changed over in a corresponding manner from the driving state to the uncoupled state, as a result of which these are stopped and the drive rollers are prevented from sliding against the loading pallet. When the loading pallet 40 is removed from the roller conveyor the detecting arm 42 is raised under the action of its spring which means that the associated drive rollers 2, 44, 45, 46 are changed over to the driving state, as a result of which the loading pallet 41 is conveyed forwards to the end of the conveyor despite the fact that the detecting arm 43 is pressed down. After the load pallet 41 has passed the detecting arm 23, this is also raised so that the associated group of drive rollers can be changed over to the driving state and following load pallets can be conveyed forwards in a corresponding manner.

According to another form of embodiment, the coupling device is not constructed in the form of a claw coupling with positive locking between the two coupling members but is of the friction coupling type with frictional engagement. This second form of embodiment is shown by way of example in Fig. 5 which shows the coupling in the coupling position, Fig. 6 shows the coupling in the release position and Fig. 7 which shows the coupling in a partially cut-away view from above. Figs. 5 and 6 are sections on the line V—V in Fig. 7.

In this form of embodiment, all the parts which correspond to parts in the form of embodiment shown in Figs. 2 and 3 are designated by corresponding numerals with the addition of the number 100. The friction coupling as shown in Figs. 5, 6 and 7 can be mounted in the drive roller 2 as shown in Fig. 1 in the same manner as the claw coupling, but the construction of the coupling differs in certain parts. Thus the first coupling member 113, that is to say the coupling member situated at the drive side in the example, comprises an axially symmetrical coupling surface 116 round the pivot shaft of the drive roller. Furthermore, coupling jaws 152 with friction linings 153 are coupled to the coupling arms 119 and are adapted to be pressed against the coupling surface 116 of the coupling member 113 in the coupling position of the device. In this example also, the coupling arms 119 are coupled together and are articulately connected to one another by means of pivot pins 127. Said pins 127 form a number of pivoting points between the coupling arms which together form a closed endless unit. The coupling jaws 152 are situated in connection with every second pivoting point between the coupling arms. Thus, in the example shown, three coupling jaws are provided which are articulately connected to each coupling arm by means of two pivot pins 155, 156, one pivot pin for each coupling arm. The coupling jaws 152 are orientated to one end 154 of the coupling arms, the opposite end 125 of which forming control portions supporting the control ring 134. The coupling jaws 152 are provided with lateral slits 129 for engagement with the pivoting pins 155, 156, said pins 155, 156 are positioned between the pivot axis 120 of each coupling arm 119 and the pivot pin 127 at each coupling jaw 152. By analogy with the preceding example the coupling arms 119 are articulately connected to the holder 118 by means of a pivot shaft 120 which extends between the two annular disc elements 121 of the holder, one of which is removed by the section. The control portion 125 of the coupling arms is adapted to cooperate with the inside of the control ring 134 which in the coupling position of the device is situated substantially symmetrically in relation to the axis of rotation of the drive roller and of the device.

As can be seen from Fig. 7, each coupling jaw 152 comprises a groove 160 which the pivot pin 155 bridges and extends through a bore in the coupling arm 119. Every coupling jaw 152 has a recess 157 engaging the pivot pin 127 for lateral positioning of the coupling jaw. At every pivoting point between the coupling arms 119 the openings 129 for the pivoting pins 127 are oblong in order to allow the necessary movements.

In the coupling position of the coupling device, as in the first example, the control arm 135 is in a lowered position with its control portion 136 which is thus not in contact with the control ring 134. In this position the coupling jaws 152 are held pressed under the influence of springs 130 (as in the previous example) with their friction linings 153 against the coupling surface 116, as a result of which the two coupling members 121, 122 are coupled together without mutual turning and the drive roller can be entrained by the drive device.

When the coupling device is to be changed over into the release position for example to uncouple the drive roller from the drive device, the control arm 135 is displaced along its guide 137, the control portion 136 being pressed substantially tangentially or parallel to the tangent against the control ring 134. This is then displaced substantially radially whereupon the control ring is braked by friction against the control portion 136 and slides in relation to the other parts of the coupling device which rotate together with the drive roller in the coupling position. When the control ring is displaced, the coupling arms 119 are pressed in by pressing of the inside of the control ring against the radially outer ends of the coupling arms, that is to say their control portions 125. In the course of this, the control arms are swung into the position shown in Fig. 6 and form coherent arcuate-shaped portions in each pair. At the same time the opposite ends 154 of the control arms swing out which means that the coupling jaws 152 by means of the pivot pins 155 are lifted radially outwards from bearing against the coupling surfaces 116 against the action of the springs 130, whereupon the coupling device is released and the one coupling member and hence also the drive roller stops, while the other coupling member to which the coupling surface 116 belongs, is permitted to rotate.

When the coupling device is to be changed over from the release to the coupling position, the device acts in the same manner in principle but with the opposite movements. When the control arm 135 is displaced so that the control portion 136 is again brought into the position shown in Fig. 5, the control ring 134 is enabled to assume its symmetrical position. In this case, the coupling arms 119 are able to swing out when their control portions 125 by the action of their springs 130 leading to the fact that the coupling jaws 152 are again pressed inwards against the coupling surface 116 by means of the pivot pins, whereupon the drive roller is again entrained by the rotating coupling member and accompanies its rotational movement.

Through the friction coupling, a more gentle transition between the various coupling positions is naturally obtained by the friction of the coupling jaws 152, slipping against the coupling surface 116 occurring at the beginning. As indicated in the drawing a slight clearance may be an advantage between the control ring 134 and the control portions 125 of any one of the coupling arms 119 to ensure the pressing of the coupling jaws 152 into the coupling position, not least in view of the changes in position which are caused by wear of the friction lining of the coupling jaws.

Thus common to both forms of embodiment is the simple construction of the coupling with pivotable control arms which are surrounded by a control ring which is displaceable substantially radially in relation to the axis of rotation of the drive roller so as to change the coupling over between the coupling position and the release position as a result of the fact that the coupling arms comprise, at one end, coupling members which can be changed over between a coupling position and a release position by displacement of the coupling member. These are exposed to spring forces which tend to bring the coupling members into the coupling position. In the first example the actual coupling arms are formed as a coupling member at one end while in the second case the coupling member consists of a separate element which is connected to the coupling arm.

The coupling device according to the second example can be used in precisely the same manner as the device according to the first example, so that the application as shown in Fig. 4 can comprise coupling devices according to one example or the other.

The invention is not restricted to the example of embodiment described above and shown in the drawings but can be varied in a plurality of ways within the scope of the following claims. For example, the coupling hook elements may be formed in various ways and may, for example, be constructed in the form of a one-armed lever with its pivotal axis situated at one end of the element. The activation of the control ring 34 can be effected in another manner for example by means of an element directed more radially rather than tangentially. Although the coupling device is intended primarily for the drive rollers of roller conveyors, other applications are conceivable where couplings of the present type, that is to say claw couplings, occur.

**Claims**

1. A coupling device (1) for the coupling up or uncoupling of a drive roller (2, 44—48) mounted for rotation about a pivot shaft (3), for example for a roller conveyor, and comprising two coupling members (13, 18/113, 118) which are rotatable coaxially with the pivot shaft of the drive roller and which are adapted to be changed over, by means of a control member (35/135) between a coupling together state in which they are held against rotation in relation to one another and a state in which they are uncoupled from one another and in which the coupling members are permitted to rotate in relation to one another, one of the coupling members being connected to the drive roller which is held against rotation in relation thereto and the other coupling member being connected to a rotatable drive device, said one coupling member (13/113) comprising at least one coupling surface (15/115) and said other coupling member (18/118) comprising at least three coupling arms or elements (19/119) each of which is pivotable about its own pivot shaft (20/120) substantially parallel to the pivot shaft (3) of the drive roller (2, 44—48) and at least three coupling portions (24/152) which can be changed over, by means of the coupling arms, between a release position and a coupling position, characterized that the other coupling member (18/118) includes a circular control ring (34/134) which is situated radially outside the coupling arms (18, 119) and is displaceable substantially radially, said control ring having an inner contact surface, by means of which the control ring is arranged to cooperate with a control portion (25/125) of the coupling arms, and an outer contact surface, by means of which the control ring is arranged to cooperate with the control member (35/135), the coupling arms (18, 118) being spring-loaded into a coupling position in which the control ring is held centered about the pivot shaft of the drive roller and the other coupling members (18, 118) are in engagement with the coupling surface or surfaces (15, 115) of the one coupling member (13, 113) and can be changed over into a release position to change over the coupling members from a coupling position to a release position by pressing the control member against the outer contact surface of the control ring, causing substantially radial displacement of the control ring to an eccentric position relatively to said pivot shaft and a pressing of the control ring with its inner contact surface against the control portions (25, 125) of the coupling arms (19, 119) for said pivoting movement of the coupling arms.

2. A coupling device (1) as claimed in claim 1, characterized in that said coupling portions (24) are formed from one end of each coupling arm (19) and consists of a hooking portion, that said coupling surface (15) or surfaces are formed by at least three radially directed engagement portions with which the hooking portion of the coupling arms can be hooked up in said coupling position, and that the opposite end of the coupling arms forms said control portion (25) by means of which the control ring (34) is supported.

3. A coupling device (1) as claimed in claim 2, characterized in that the pivot shaft (20) of the coupling hook element (19) is situated between the hooking portion (24) and the control portion (25), that the coupling hook elements are coupled together to form a ring and each have an arcuate extent, and that said ring shape in said uncoupled state is circular with a radius of curvature which is less than the radius of curvature of the control ring.

4. A coupling device as claimed in claim 3, characterized in that the coupling hook elements (19) face one another in pairs so that the control portions (25) are mutually coupled together in pairs and their hooking portions (24) are mutually coupled together in pairs.

5. A coupling device as claimed in claim 1, characterized in that the coupling portions (152) consist of coupling jaws with friction linings (153) which tend to be pressed, by means of spring force, against said coupling surface (116) which is axially symmetrical about the pivot shaft (3) of the drive roller (2).

6. A coupling device as claimed in claim 5, characterized in that the coupling arms (119) are coupled together at their two ends respectively to form a continuous closed unit with pivoting points between the coupling arms, the coupling jaws (152) being coupled at every second of said pivoting points and being articulately connected to the coupling arms the ends of which being opposite to the ends at the coupling jaws respectively forming control portions adapted to be activated for changing over the coupling arms to the release position by pressing in substantially radially inwards by means of the control ring (134).

7. A coupling device as claimed in claim 6, characterized in that each coupling jaw (152) is pivotally journalled in each coupling arm (119) by means of a pivoting pin (155), positioned between their pivoting axis (120) and every second pivoting point.

8. A coupling device as claimed in claim 1, characterized in that said second coupling member (18, 118) comprises a holder which consists of two annular disc elements (21, 22/121) which are situated parallel to one another with spacing and which are connected to the drive roller (2, 44—48) being held against rotation in relation thereto and between which the control ring (34, 134) and the coupling arms (18, 191) are mounted.

9. A coupling device as claimed in claim 1, characterized in that said control member (35) consists of a control portion (36) which can be pressed against the outer periphery of the control ring (34).

10. A coupling device as claimed in claim 9, characterized in that a plurality of control portions (36) are mounted on one control arm (35) and are adapted each to change over simultaneously its own coupling device included in a group of drive rollers (2, 44—48) included in a roller conveyor.

11. A coupling device as claimed in claim 10, characterized in that the control arm (35) is coupled to a detecting member (42, 43) which is adapted to detect the presence or absence of an article (40, 41) on a certain part of the roller conveyor and in the event of presence to hold the drive rollers in the uncoupled state and in the event of absence to hold the drive rollers in the uncoupled state.

**Patentansprüche**

1. Kupplungsvorrichtung (1) zwecks Kupplung und Ausrückens einer um einen Achselzapfen (3) beispielsweise eines Rollgangs drehbar gelagerten Antriebswalze (2, 44—48), und die zwei Kupplungsteile (13, 18/113, 118) umfasst, die mit dem Achselzapfen der Antriebswalze koaxial drehbar sind und mittels einer Steuerung (35/135) zwecks Umschaltung, zwischen einem zusammengekuppelten Zustand, worin sie gegen Drehung im Verhältnis zu einander festgehalten sind, und einem Zustand, worin sie von einander ausgekuppelt sind und sich im Verhältnis zu einander drehen können, eingerichtet sind, wobei ein erster Kupplungsteil mit der Antriebswalze verbunden ist, die gegen Drehung im Verhältnis zu demselben festgehalten ist, und der andere Kupplungsteil mit einer drehbaren Antriebsvorrichtung verbunden ist, wobei der erwähnte erste Kupplungsteil (13/113) wenigstens eine Kupplungsfläche (15/115) umfasst, und der erwähnte andere Kupplungsteil (18/118) wenigstens drei Kupplungsarme oder Elemente (19/119) umfasst, wovon ein jedes um seinen eigenen Achselzapfen (20/130) hauptsächlich parallel dem Achselzapfen (3) der Antriebswalze (2, 44—48) schwenkbar ist, und wenigstens drei Kupplungsteile (24/152), die mittels der Kupplungsarme zwischen einer Auslösungslage und einer Kupplungslage umgeschaltet werden können, dadurch gekennzeichnet, dass der andere Kupplungsteil (18/118) einen kreisförmigen Steuerring (34/134) einbegreift, der an der Aussenseite der Kupplungsarme (19/119) gelegen und hauptsächlich radial verschiebbar ist, wobei der erwähnte Steuerring eine innere Anlagefläche hat, mittels welcher der Steuerring zwecks Zusammenarbeit mit einem Steuerelement (25/125) der Kupplungsarme angeordnet ist, und eine äussere Anlagefläche hat, mittels welcher der Steuerring zwecks Zusammenarbeit mit dem Steuerelement (35/135) angeordnet ist, wobei die Kupplungsarme in eine Kupplungslage hinein federbelastet sind, worin der Steuerring in zentraler Lage um den Achselzapfen der Antriebswalze gehalten ist, und die anderen Kupplungsteile (18/118) in die Kupplungsfläche oder Kupplungsflächen (15/115) des ersten Kupplungsteils (13/113) eingreifen und in eine Auslösungslage umgeschaltet werden können, um die Kupplungselemente von einer Kupplungslage in eine Auslösungslage mittels Drucks des Steuerelements gegen die äussere Anlagefläche des Steuerrings umzuschalten, was hauptsächlich eine radiale Verschiebung des Steuerrings in eine im Verhältnis zum erwähnten Achselzapfen exzentrische Lage und einen Druck des Steuerrings mit seiner inneren Anlagefläche gegen die Steuerelemente (25/125) der Kupplungsarme zwecks der erwähnten Schwenkbewegung der Kupplungsarme bewirkt.

2. Eine Kupplungsvorrichtung (1) gemäss Patentanspruch 1, dadurch gekennzeichnet, dass die erwähnten Kupplungsteile (24) von einem Ende jedes Kupplungsarms (19) ausgebildet sind und aus einem Hakenteil bestehen, dass die erwähnte Kupplungsfläche oder Kupplungsflächen (15) von wenigstens drei radial gerichteten Eingriffsteilen ausgebildet sind, an welche der Hakenteil der Kupplungsarme in der erwähnten Kupplungslage angehakt werden können, und dass das entgegengesetzte Ende der Kupplungsarme das erwähnte Steuerelement (25) bildet, mittels welches der Steuerring (34) abgestützt ist.

3. Eine Kupplungsvorrichtung (1) gemäss Patentanspruch 2, dadurch gekennzeichnet, dass der Achselzapfen (20) des kupplungsbezweckten Hakenteils (19) zwischen dem Hakenteil (24) und dem Steuerelement (25) gelegen ist, dass die kupplungsbezweckten Hakenelemente zusammengekuppelt sind, um einen Ring zu bilden, und einen gewölbten Umfang haben, und dass die Form des erwähnten Rings in der erwähnten ausgekuppelten Lage kreisförmig ist und einen Biegungsradius aufweist, der kleiner ist als der Biegungsradius des Steuerrings.

4. Eine Kupplungsvorrichtung gemäss Patentanspruch 3, dadurch gekennzeichnet, dass die kupplungsbezweckten Hakenelemente (19) einander paarweise gegenüberstehen, sodass die Steuerelemente (25) gegenseitig paarweise zusammengekuppelt sind und ihre Hakenteile (24) gegenseitig paarweise zusammengekuppelt sind.

5. Eine Kupplungsvorrichtung gemäss Patentanspruch 1, dadurch gekennzeichnet, dass die Kupplungsteile (152) aus Kupplungsbacken mit Reibbelägen (153) bestehen, die danach streben, mittels Federbelastung zusammengepresst zu werden und zwar gegen die erwähnte Kupplungsfläche (116) die um den Achselzapfen (3) der Antriebswalze (2) axial symmetrisch ist.

6. Eine Kupplungsvorrichtung gemäss Patentanspruch 5, dadurch gekennzeichnet, dass die Kupplungsarme (119) an ihren beiden respektiven Enden zusammengekuppelt sind um eine kontinuierlich geschlossene Einheit mit Drehungspunkten zwischen den Kupplungsarmen zu bilden, wobei die Kupplungsbacken (152) an jeden zweiten der erwähnten Drehungspunkte angekuppelt und mit den Kupplungsarmen gelenkig verbunden sind, deren Enden den Enden der Kupplungsbacken gegenüberstehen, die Steuerteile bilden, die derart eingerichtet sind, dass sie zwecks Umschaltung der Kupplungsarme in die Auslösungslage dadurch aktiviert werden, dass sie mittels des Steuerrings (134) hauptsächlich radial nach innen gepresst werden.

7. Eine Kupplungsvorrichtung gemäss Patentanspruch 6, dadurch gekennzeichnet, dass jede Kupplungsbacke (152) auf jedem Kupplungsarm (119) mittels eines Drehbolzens (155) drehbar gelagert ist, der zwischen ihrer Dreh-achse (120) und jedem zweiten Drehungspunkt gelegen ist.

8. Eine Kupplungsvorrichtung gemäss Patentanspruch 1, dadurch gekennzeichnet, dass der erwähnte zweite Kupplungsteil (18, 118) einen Halter umfasst, der aus zwei ringförmigen Scheibenelementen (21, 11/121) besteht, die mit einem Zwischenraum parallell mit einander gelegen und mit der Antriebswalze (2, 44—48) verbunden sind, die gegen Drehung im Verhältnis dazu festgehalten ist, und zwischen welchen der Steuerring (34, 134) und die Kupplungsarme (19, 119) montiert sind.

9. Eine Kupplungsvorrichtung gemäss Patentanspruch 1, dadurch gekennzeichnet, dass das erwähnte Steuerelement (35) aus einem Steuerteil (36) besteht, der gegen die äussere Peripherie des Steuerrings (34) gepresst werden kann.

10. Eine Kupplungsvorrichtung gemäss Patentanspruch 9, dadurch gekennzeichnet, dass eine Mehrzahl von Steuerteilen (36) auf einem Steuerarm (35) montiert ist, und dass ein jeder derart angeordnet ist, dass er seine eigene Kupplungsvorrichtung, die einer Gruppe von Antriebswalzen (2, 44—48) eines Rollgangs gehört, gleichzeitig umschaltet.

11. Eine Kupplungsvorrichtung gemäss Patentanspruch 10, dadurch gekennzeichnet, dass der Steuerarm (35) an ein Detektorelement (42, 43) angekuppelt is, das zwecks Anzeigung des Vorhandenseins oder Nichtvorhandenseins eines Gegenstands (40, 41) an einer bestimmten Stelle des Rollgangs angeordnet ist, und im Falle des Vorhandenseins die Antriebswalzen in ausgekuppeltem Zustand hält und im Falle des Nichtvorhandenseins die Antriebswalzen in ausgekuppeltem Zustand hält.

**Revendications**

1. Dispositif d'accouplement (1) pour l'accouplage ou découplage d'un rouleau de propulsion (2, 44—48) monté pour rotation autour d'un tourillon (3) par example d'un transporteur à galets et comprenant deux éléments d'accouplage (13, 18/113, 118) coaxialement rotatifs avec le tourillon du rouleau de propulsion, qui peuvent chager du sens de rotation au moyen d'un élément gouvernant (35, 135) entre un état accouplé, dans lequel ils son retenus contre rotation entre l'un et l'autre, et un état, dans lequel ils son detachés de l'un et de l'autre et dans lequel les éléments d'accouplage peuvent faire un mouvement rotatif en relation d'un et d'autre, l'un premier élément d'accouplage étant attaché au rouleau de propoulsion, qui en est retenue contre rotation relative, et l'autre élément d'accouplage étant attaché a un dispositif rotatif de propulsion, le susdit premier élément d'accouplage (13, 113) comprenant au moins une surface d'accouplage (15, 115), et l'autre élément d'accouplage (18, 118) comprenant au moins trois bras d'accouplage ou éléments (19, 119), dont chacun peut pivoter autour son propre tourillon (20/120) à tout prendre parallèle au tourillon (3) du rouleau de propulsion (2, 44—48) et au moins trois parts d'accouplage (24/152), qui peuvent etre changées quant à leur position au moyen des bras d'accouplage entre une position de découplage et une position d'accouplage, caractérisé en ce que l'autre élément d'accouplage (18/118) comprend un annueau gouvernant (34/134), qui est situé radialement en dehors des bras d'accouplage (19, 119) et est déplaçable à tout prendre radialement, le susdit anneau gouvernant étant prévu d'une surface intérieure de contact au moyen de laquelle l'anneau gouvernant est arrangé à cooperer avec une part gouvernante (25, 125) des bras d'accouplage, et une surface extérieurs de contact, au moyen de laquelle l'anneau gouvernant est arrangé à cooperer avec l'élément gouvernant (35/135), les bras d'accouplage (19, 119) étant chargés par le ressort à une position d'accouplage, dans laquelle l'anneau gouvernant est retenue en position centrale autour du touril-

lon du rouleau de propulsion et les autres éléments d'accouplage (18, 118) s'enchaînent avec la surface ou les surfaces (15, 115) du premier élément d'accouplage (13, 113) y peuvent être changés à une position de découplage pour changer les éléments d'accouplage d'une position d'accouplage à une position de découplage par pression exercée sur l'élément gouvernant contre la surface extérieure de contact de l'anneau gouvernant occasionnant une déplacement à tout prendre radial de l'anneau gouvernant à une position excentrique en relation à le susdit tourillon et une pression exercée sur l'anneau gouvernant avec son surface intérieure de contact contre les parts gouvernantes (25, 125) des bras d'accouplage (19, 119) pour le susdit mouvement des bras d'accouplage.

2. Dispositif d'accouplement (1) selon revendication 1, caractérisé en ce que les susdits éléments d'accouplage (24) sont formés d'une extrémité de chaque bras d'accouplage, en ce que la surface ou les surfaces d'accouplage (15) sont formés par au moins trois parts d'enchaînement radialement dirigées, avec lesquelles la part d'accrochage des bras d'accouplage peuvent être enchaînées dans la susdite position d'accouplage, et en ce que l'éxtrémité opposé des bras d'accouplage forment la susdite part gouvernante (25) au moyen de laquelle l'anneau gouvernant (34) est supporté.

3. Dispositif d'accouplement (1) selon revendication 2, caractérisé en ce que le tourillon (20) d'élément d'accouplage accrochant (19) est situé entre la part d'accrochage (24) et la part gouvernante (25), en ce que les éléments d'accouplage accrochants sont accouplés l'un à l'autre pour former un anneau et que chacun a une extension arquée, et en ce que la configuration du susdit anneau dans susdit état découplé est circulaire avec un rayon de cintrage, qui est moins grand que le rayon de cintrage de l'anneau gouvernant.

4. Dispositif d'accouplement selon revendication 3, caractérisé en ce que les éléments d'accouplage accrochants (19) se trouvent l'un en face à l'autre par paires, de manière que les parts gouvernantes (25) sont mutuellement accouplées l'une à l'autre par paires et leurs parts d'accrochage (24) sont mutuellement accouplées l'une à l'autre par paires.

5. Dispositif d'accouplement selon revendication 1, caractérisé en ce que les parts d'accouplage (152) se composent de mors avec des couches de friction (153), qui tendent à être pressées au moyen de force de ressort contre la susdite surface d'accouplage (116), que est axialement symétrique au tourillon (3) du rouleau de propulsion (2).

6. Dispositif d'accouplement selon revendication 5, caractérisé en ce que les bras d'accouplage (119) sont accouplés l'un à l'autre à leurs deux extrémités respectivement pour former une unité fermé continuelle avec de points de pivotements entre les bras d'accouplage, les mors d'accouplage (152) étant accouplé en tous les deux points des susdits points de pivotement et en manière articulée attachés à les bras d'accouplage, dont les extrémités se trouvent à l'opposite des extrémités des mors d'accouplage respectifs, qui forment des parts gouvernantes arrangées d'être activées pour changer les bras d'accouplage à la position de découplages par pression executée à tout prendre radialement vers l'intérieur au moyen de l'anneau gouvernant (134).

7. Dispositif d'accouplement selon revendication 6, caractérisé en ce que chaque mors d'accouplage (152) est pivotant sur chaque bras d'accouplage (119) au moyen d'un tourillon (155) qui se trouve entre leur arbre de mouvement pivotant (120) et tous les deux points de pivotement.

8. Dispositif d'accouplement selon revendication 1, caractérisé en ce que le susdit élément d'accouplage (18, 118) comprend un support, qui se compose de deux disques annulairs (21, 22/121), qui sont paralleles l'un à l'autre avec un espace, et qui sont attachés au rouleau de propulsion (2, 44—48), qui en est retenu contre rotation relative, et entre lesquels l'anneau gouvernant (34, 134) et les bras d'accouplage (19, 119) sont montés.

9. Dispositif d'accouplement selon revendication 1, caractérisé en ce que le susdit élément gouvernant (35) se compose d'une part gouvernante (36), qui peut être pressée contre la périphérie extérieure de l'anneau gouvernant (34).

10. Dispositif d'accouplement selon revendication 1, caractérisé en ce que une pluraliteté des parts gouvernantes (36) sont montées sur un bras gouvernant (35), chacune étant arrangée de changer simultanément son dispositif d'accouplage inclus dans un groupe de rouleaux de propulsion (2, 44—48), qui font partie d'un transporteur à galets.

11. Dispositif d'accouplement selon revendication 10, caractérisé en ce que le bras gouvernant (35) est accouplé à un élément détecteur (42, 43), qui est arrangé à détecter la présence ou l'absence d'un objet (40, 41) sur une partie déterminée du transporteur à galets et en cas de présence à retenir les rouleaux de propulsion dans l'état de découplage et en cas d'absence de retenir les rouleaux de propulsion dans l'état de découplage.

2   23 10 18 21        22 1 11 13

II

14

9

12

3

6

7

4

8

II

0 082 152

_Fig. 1_

*Fig. 2*

_Fig. 3_

Fig. 4

_FIG.5_

*FIG.6*

FIG.7